# EUROPEAN PATENT SPECIFICATION

(11) **EP 3 882 066 B1**
(45) Date of publication and mention of the grant of the patent: **29.10.2025**
(21) Application number: 20163957.2
(22) Date of filing: 18.03.2020
(51) Int. Cl.: B60K 35/00, B60K 35/10, B60K 35/22, B60K 35/65

(54) **CENTRAL CONTROL UNIT FOR A VEHICLE INTERIOR**
ZENTRALE STEUEREINHEIT FÜR EINEN FAHRZEUGINNENRAUM
UNITÉ DE COMMANDE CENTRALE POUR UN HABITACLE DE VÉHICULE

(43) Date of publication of application: 22.09.2021
(73) Proprietor: Inalfa Roof Systems Group B.V., 5807 GW Oostrum (NL)
(72) Inventor: SANDERS, Joseph Petrus Johannus, 5432 KE Cuijck (NL); ALBERS, Thomas Anton Martijnszoon, 5804 XJ Venray (NL); VERVOORT, Stephan Christiaan, 5831 HB Boxmeer (NL)
(74) Representative: De Vries & Metman

(56) References cited:
- EP-A1- 1 424 237
- DE-A1- 102017 221 212
- DE-A1- 19 941 560
- DE-B4- 19 941 560

## Description

The invention relates to a central control unit for a vehicle interior as defined in the preamble of claim 1. As closest prior art, document EP-A-1 424 237 only in very general terms describes the position of such a control unit in a vehicle roof.

It is known to provide one or more sensors in a vehicle. The sensors may be provided to detect and control the technical operation of the vehicle, to detect and monitor an exterior of the vehicle, e.g. for autonomous driving, or to detect an interior condition, e.g. passenger presence detection. Such sensors may be arranged in the vehicle in many locations and positions.

Every sensor is to be coupled to a control unit in the vehicle such that an output of the sensor may be interpreted and be used for controlling or adapting another device or assembly in the vehicle. An amount of cabling in the vehicle may increase fast, adding weight and costs. Therefore, it is known to provide for a vehicle network applying bus communication. For example, a CAN-bus or a LIN-bus communication-type of network may be present. Still, the cabling for the vehicle network needs to be provided to each and every sensor.

Apart from the sensors arranged in the vehicle, other functions are commonly provided. Such functions may include user interface functions. A user interface function receives an input from a user, e.g. a passenger or driver. It is noted that hereinafter, the driver will be considered as a passenger and thus any reference to a passenger is intended to include a reference to a driver. The input from the user is then interpreted such to perform any kind of action. User input may be received through mechanical interaction, e.g. by use of a button or a touch panel or through other kind of interaction like voice control or gesture control. Such user interaction functions require even further cabling and add more complexity.

Therefore, it is an object of the present invention to provide a device or assembly that reduces an amount of cabling and complexity, while still providing all functionality and preferably even improves such functionality.

In a first aspect, the object is achieved in a control unit according to claim 1. The at least one user interaction function comprises at least one function of a group of functions comprising switching, gesture detection and displaying. User interaction may comprise the user providing an input through switching, gesture control, voice control and the like or may comprise providing an output to the user such as displaying information or providing audible information. Many more kinds of user interaction functions are conceivable and may be integrated in the control unit according to the present invention. The control unit according to the present invention further is configured to be mounted in a centre portion of a vehicle roof in a passenger compartment of a vehicle, wherein the centre portion of the vehicle roof is defined as a surface area of the vehicle roof that extends in a main driving direction from a backrest of a front seat in the passenger compartment to a backrest of a back seat; and is arranged in a transverse direction centred between a first lateral edge of the vehicle roof and an opposite second lateral edge of the vehicle roof, the transverse direction being perpendicular to the main driving direction. The control unit is further configured to sense at least one condition in the passenger compartment; provide at least one user interaction function; and communicate with a further control unit in the vehicle.

According to the present invention, a control unit integrating sensing functionality and user interfacing functionality is arranged in a central position in the vehicle. In particular, in a centre portion of the vehicle roof, sensing any passenger compartment condition is relatively easy due to the opening to the whole compartment without obstructing elements, while for user interaction all passengers have access to the centre portion of the vehicle roof. So, the user interaction function may be accessible to both front passengers and rear passengers. In future, this may become more and more important. For example, in an autonomous driving vehicle all passengers may be interacting with different functions in the vehicle.

The integration of the sensing and user interaction functionality allows to have a significantly reduced amount of cabling to the further control unit. Such a further control unit may be a central control unit of the vehicle or any other one of a number of control units. Moreover, functionally, the control unit according to the present invention may be operatively coupled to multiple further control units through a vehicle network or through a dedicated connection. Essentially, the control unit according to the present invention is a hub for connecting at least one sensing function and at least one user interaction function to one or more further control units, taking into account that both the sensing function and the user interaction function may benefit from being arranged in the centre portion of the vehicle roof.

In order to enable both front passengers and rear passengers to interact with the control unit, the centre portion of the vehicle roof is defined as an interior surface area of the vehicle roof that extends in a main driving direction from a backrest of a front seat in the passenger compartment to a backrest of a back seat and that is arranged in a transverse direction centred between a first lateral edge of the vehicle roof and an opposite second lateral edge of the vehicle roof, the transverse direction being perpendicular to the main driving direction. The front seats are usually moveably arranged. The position of the backrest of the front seat is defined as the position of the backrest, when the front seat is in the most forward position. Thus, the front seat passengers are enabled to operate the user interaction function of the control unit irrespective of the position of the front seat. Further, the centre position in the transverse direction enables passengers seated on the left lateral side and passengers seated on the right lateral side to operate the user interaction function.

In an embodiment of the control unit, the control unit comprises a housing, wherein the housing is arranged in the centre portion of the vehicle roof. Such a housing may have an aesthetically pleasing look and feel, while covering other parts of the control unit and possibly even other devices. Further, the housing may be designed for a suitable positioning of sensors and actuators, if any. In particular, positioning of a sensor may be relevant in order to ensure a reliable operation of the sensor. Even further, the look and feel may be adapted to the positioning of the sensor. For example, an infrared sensor may be positioned behind a visually black surface, which may be transparent for infrared radiation such that the infrared sensor is virtually invisible, while still operative.

In a particular embodiment, the housing further comprises a ventilation function, wherein the ventilation function is configured to provide an air flow path between the passenger compartment and an exterior of the vehicle. The housing of the control unit may be mounted to cover an opening in the vehicle roof. Means may be provided to selectively open or close the air flow path. Such means may comprise a moveably, e.g. hingedly, arranged closure member, e.g. a panel, in an exterior plane of the vehicle roof. Further, air flow stimulating means, like a fan, may be provided to enable to control an amount of air flow between an interior passenger compartment and the exterior of the vehicle.

In an embodiment, the control unit comprises a sensor to sense the at least one condition in the passenger compartment. Such a sensor may be any kind of dedicated sensor enabling to sense the at least one condition. As an example of a dedicated sensor, a temperature sensor for determining an interior temperature may be provided. On the other hand, a multipurpose sensor may be provided as well, in which case a kind of post-processing of the sensor signal may be performed by the control unit to determine the at least one condition. For example, a motion detection system may be used to detect presence of persons in the interior passenger compartment of the vehicle, wherein a signal from a sensor needs to be interpreted in order to determine whether a moving object is present in the interior passenger compartment.

In an embodiment, the at least one condition in the passenger compartment is at least one of a group of conditions, the group comprising temperature, air quality and passenger presence. These conditions may be considered as mere examples as many other conditions may be sensed and monitored alternatively or additionally.

In an embodiment, the at least one user interaction function comprises at least one function of a group of functions, the group comprising switching, gesture detection and displaying. User interaction may comprise the user providing an input through switching, gesture control, voice control and the like or may comprise providing an output to the user such as displaying information or providing audible information. Many more kinds of user interaction functions are conceivable and may be integrated in the control unit according to the present invention.

In an embodiment, the control unit is provided with a network communication module to communicate with the further control unit in the vehicle. A specific network communication module may be provided to communicate with the further control unit in the vehicle. For example, common automotive network protocols like CAN and LIN may be supported by the network communication module. In particular, the network communication module may be an exchangeable module such that a generic control unit may be provided with a specific network communication module to enable interfacing and communicating with the further control unit using the available network protocols.

In an embodiment, the control unit is configured to communicate the sensed condition in the passenger compartment to the further control unit in the vehicle. The further control unit may be any kind of control unit in the vehicle that may employ the sensed condition to perform any kind of operation. For example, a temperature sensed in the centre portion of the vehicle roof may be used by the air conditioning system to adapt its settings or a passenger detection system may provide its sensed condition to an airbag system, potentially obviating the need for seat-occupation sensors in the seats.

In an embodiment, the control unit is configured to communicate a user interaction signal of the user interaction function between the control unit and the further control unit in the vehicle. Similar to the sensed condition, any other control unit in the vehicle may receive a signal corresponding to the user interaction function of the control unit such that a user may interact with any system in the vehicle through the control unit in the centre portion of the vehicle roof.

It is noted that both for sensing functionality and for user interaction functionality, the control unit in the centre portion of the vehicle roof may receive a sensing signal or a user interaction signal from any further control unit in the vehicle. Such received signal may then be employed, e.g. in combination with any other sensing or user interaction signal, for performing an operation or generating another sensing signal.

In an embodiment, the control unit is provided with a sensor for sensing the at least one condition in the passenger compartment. As mentioned hereinabove, the control unit is provided with a sensing function for sensing at least one condition in the passenger compartment. Such sensing function may be achieved using direct or indirect sensors and such sensors may be arranged at any suitable location in the vehicle. Still, in a preferred embodiment, at least one sensor is arranged in the control unit. A sensor in the control unit is arranged in the centre portion of the vehicle providing a minimum of obstructing elements between the sensor and the passenger compartment, in particular the seats in the passenger compartment. Further, such a sensor may provide its output signal directly, reducing signal communications between the control unit and the one or more further control units.

In an embodiment, a further sensor is arranged outside the centre portion of the vehicle roof, the further sensor being operatively coupled to the control unit for communicating with the further control unit. As aforementioned, it may be preferred to have a direct coupling between a sensor and the control unit to reduce signal communications between the control unit and any further control unit. Still, a certain sensor may be preferred to be arranged at a different location than in the centre portion of the vehicle roof. Such a sensor may be arranged at its preferred location with a direct coupling to the control unit. This may be preferred despite the dedicated cabling, if a roof assembly is prefabricated including the control unit and such distanced sensors and the roof assembly is then mounted on a body of a vehicle as a whole. The control unit is then connectable to the vehicle communication network with a minimum of cabling and connectors, while the distanced sensors may be located at their preferred locations, **e.g.** in an edge portion of the vehicle roof.

An example of a prefabricated roof assembly is an open roof assembly comprising a moveable, e.g. slidably moveable, transparent roof panel. Such an open roof assembly commonly comprises a frame assembly. The frame assembly supports a mechanism and at least one roof panel. The frame assembly may then be mounted and adhered on a vehicle body. Other exemplary embodiments include a fixed transparent roof panel or a roof panel provided with one or more sensor devices for sensing external conditions and objects for an autonomous driving vehicle, for example. It is contemplated that such exterior sensors may be coupled to the present control unit as well, wherein the control unit may process the sensor signals or may merely function as a communication means for providing the sensor signals to the further control unit.

In an embodiment, the controlling unit is provided with a processing unit, wherein the processing unit is configured to interpret at least one of a sensing signal and a user interfacing signal.

In a further aspect, the present invention provides a vehicle provided with the control unit as above described.

In a particular embodiment, the vehicle is provided with a connector device in a centre portion of a vehicle roof, wherein the connector device is coupled to a further control unit of the vehicle. A control unit as above described is mountable in a centre portion of the vehicle roof and the control unit is provided with a mating connector device configured to mate with the connector device of the vehicle for operatively coupling the control unit to the further control unit. In an embodiment, the connector device may be coupled to a power source for supplying a supply voltage and the control unit may be configured to receive the supply voltage through the mating connector device.

Further scope of applicability of the present invention will become apparent from the detailed description given hereinafter. However, it should be understood that the detailed description and specific examples, while indicating embodiments of the invention, are given by way of illustration only, since various changes and modifications within the scope of the claims will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: shows a perspective view of an upper part of a vehicle;
- Fig. 2B: shows a schematic plan view of a first embodiment of an interior of a vehicle;
- Fig. 2C: shows a schematic plan view of a second embodiment of an interior of a vehicle;
- Fig. 3A: a schematic representation of a first embodiment of a control unit according to the present invention;
- Fig. 3B: a schematic representation of a second embodiment of a control unit according to the present invention;
- Fig. 4A: a perspective view of a first exemplary passenger compartment with a control unit according to the present invention;
- Fig. 4B: a perspective view of a second exemplary passenger compartment with a control unit according to the present invention;
- Fig. 4C: a perspective view of a third exemplary passenger compartment with a control unit according to the present invention;
- Fig. 4D: a perspective view of a fourth exemplary passenger compartment with a control unit according to the present invention;
- Fig. 5A: a perspective bottom view of a first embodiment of a roof assembly comprising a control unit according to the present invention;
- Fig. 5B: a top view of the first embodiment of a roof assembly according to Fig. 5A;
- Fig. 5C: a bottom view of the first embodiment of a roof assembly according to Fig. 5A;
- Fig. 6A: a perspective bottom view of a second embodiment of a roof assembly comprising a control unit according to the present invention;
- Fig. 6B: a top view of the second embodiment of a roof assembly according to Fig. 6A;
- Fig. 6C: a bottom view of the second embodiment of a roof assembly according to Fig. 6A;
- Fig. 7: a perspective top view of a third embodiment of a roof assembly comprising a control unit according to the present invention; and
- Fig. 8: a perspective top view of a fourth embodiment of a roof assembly configured for mounting a control unit according to the present invention.

The present invention will now be described with reference to the accompanying drawings, wherein the same reference numerals have been used to identify the same or similar elements throughout the several views.

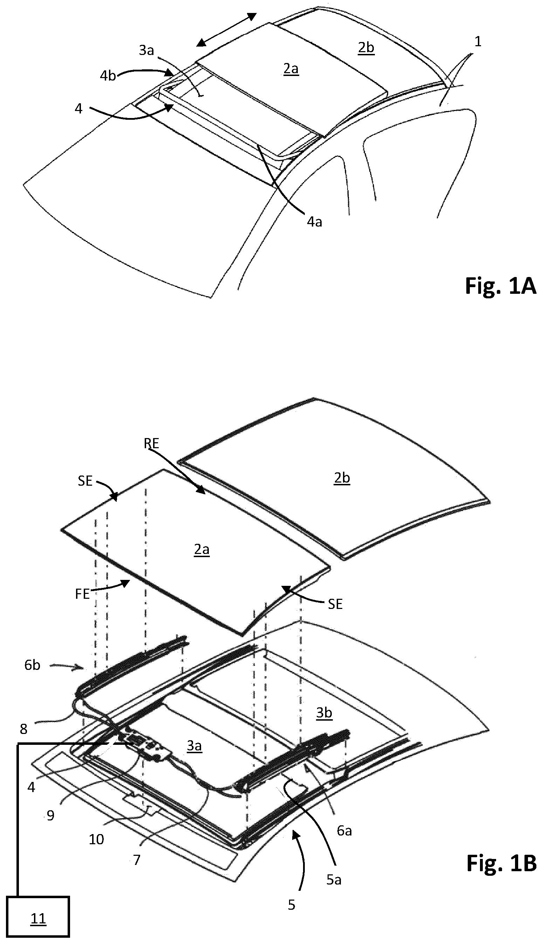

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present claims. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control unit 11 is schematically illustrated and is operatively coupled to the electric motor 9. The control unit 11 may be any kind of processing unit, either a software controlled processing unit or a dedicated processing unit, like an ASIC, which are both well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the electric motor 9 and thus the moveable roof assembly.

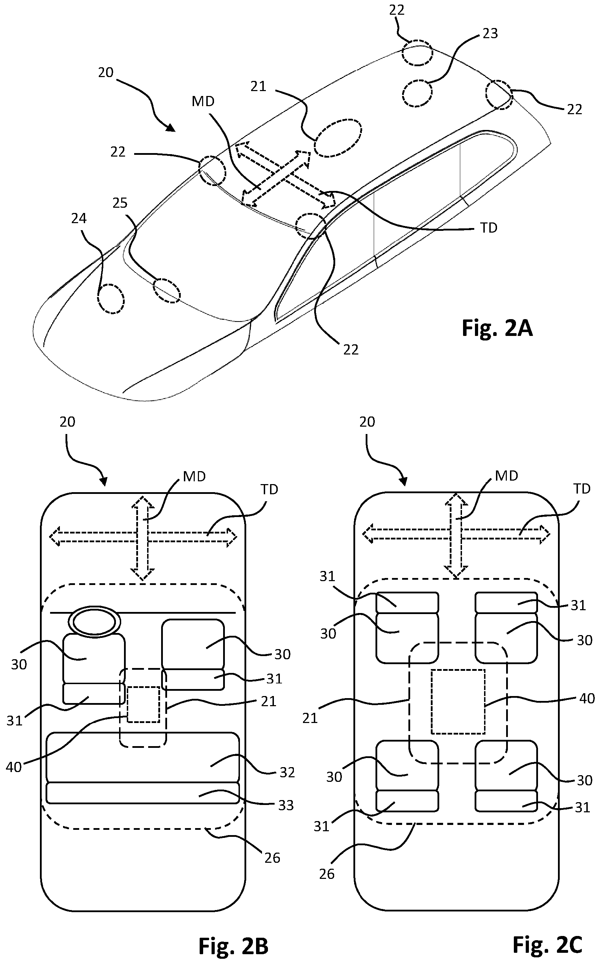

Fig. 2A shows an upper part of a vehicle 20, in particular a roof, a windscreen, a bonnet and a side of the vehicle 20. A main driving direction MD of the vehicle 20 and a transverse direction TD are indicated. The main driving direction MD is defined to be oriented in a direction corresponding to the direction in which the vehicle 20 moves when driving straight forward or backward. The transverse direction TD is perpendicular to the main driving direction MD.

A centre portion 21 of a roof area and four corner portions 22 of the roof area are known to be suited for arranging sensor systems, **e.g.** for autonomous driving. Such sensor systems are known and may comprise radar, lidar, camera's and the like. Such sensor system function optimally with a large, unobstructed field of view. On the roof, the sensor systems are provided with such an unobstructed field of view. Further, a rear centre position 23 is known for arranging an antenna, **e.g.** for radio signal reception.

An engine control unit 24 may be arranged under the bonnet for controlling operation of an engine, for example. Further, a media control unit 25 may be arranged in a dashboard of the vehicle 20 for operation of user interface functions and/or a radio, for example. The vehicle 20 may comprise many further control units, like engine control unit 24 and media control unit 25 or the vehicle 20 may be provided with only a single control unit for controlling any function and device provided in the vehicle 20.

Development of vehicles in general and autonomous vehicles in particular is leading to a change of how the vehicle 20 is used by the passengers. In particular, more functions are being provided in and on the roof of the vehicle 20. For example, as above indicated, not only an antenna but also sensors for enabling autonomous driving are envisaged to be arranged on the roof. Further, in the interior, use of digital devices for entertainment, for example, and mobility as a service, wherein passengers may be sitting at any seat in the vehicle 20, require a new layout of the vehicle 20 such that most, if not all, user interaction function are accessible from any seat position in the vehicle 20. Even further, for example for safety, sensors are being provided for sensing interior conditions like the presence of passengers, air quality sensors and the like conditions.

Fig. 2B shows a plan view of an interior 26 of a vehicle 20 with a layout common to most of nowadays vehicles. Two front seats 30 with backrests 31 and a back seat 32 with corresponding backrest 33 are arranged such that the passenger all face forward in the main driving direction MD. The front seats 30 are usually movably arranged in the main driving direction MD. The front passengers sitting on the front seats 30 are enabled to reach the dashboard and thus to operate the devices arranged in the dashboard. The backseat passengers however are not able to operate the devices in the dashboard. Therefore, in the centre portion 21 of the interior side of the roof, a control unit 40 is provided. The control unit 40 is provided with at least one user interaction function enabling both front seat passengers and backseat passengers to operate such user interaction function. Preferably, two or even more user interaction functions are provided. For example, an interior light having a light switch and a further user interaction function may be provided.

Further, in the centre portion 21 of the interior side of the roof, the control unit 40 is configured to sense at least one, but preferably two or more conditions of the interior passenger compartment 26 of the vehicle 20. For such sensing function an output of a sensor may preferably be used. Such a sensor may be comprised in the control unit 40. In particular, a sensor that requires a line of view to sensed locations is preferred to be arranged in the centre portion of the interior side of the roof. For example, a common camera, an infrared sensor, a lidar or a radar benefit from an open line of view to the locations that they need to sense. It is noted that certain sensors may function correctly even with certain obstacles in the line of view. For example, a suitably configured radar may function correctly despite certain obstacles. Still, in general, it may concluded that most such sensors operate more accurately and are less sensitive to disturbances with an open line of view.

A sensor may however be arranged at another location if such location provides a better sensor output or if such sensor is already present in the vehicle 20 and the sensor output can be used by the control unit 40. Further, if **e.g.** based on a status of further control units like the engine control unit 24 or the media control unit 25 certain conditions can be sensed, the control unit 40 may sense the interior condition without application of a sensor output.

Further, the control unit 40 is operatively coupled to at least one further control unit like the engine control unit 24 or the media control unit 25. Such operative coupling may be used to exchange a sensor signal, a sensed condition signal, an user interaction signal, a media signal like an audio or video signal, or any other kind of signal.

In general, the control unit 40 according to the present invention is configured to operate as a kind of a hub for interior condition signals and user interaction signals, overseeing the passenger compartment and providing user interaction to each passenger seat, while not being limited to the functions and sensors provided at the location of the control unit 40.

As indicated in Fig. 2B, the centre portion of the interior side of the roof in which the control unit 40 is provided extends in the main driving direction MD from the backrest 31 of the front passenger seat 30 on the right-hand side of the vehicle 20 to the backseat 32 and extends in the transverse direction TD from the backrest 31 of the driver seat 30 to the backrest 31 of the passenger seat 30. In another embodiment, the centre portion may occupy a larger area. For example, the centre portion 26 may extend in the main driving direction MD to the rear backrest 33 of the back seat 32. Further, the centre portion 26 may extends wider or smaller in the transverse direction TD, **e.g.** depending on the functionalities integrated in the control unit 40.

Fig. 2C illustrates an envisaged layout of a vehicle 20 driving autonomously and, for example, use for mobility as a service, where passengers may enter and leave depending on their location of departure and their location of arrival. For comfort and easy access, four separate seats 30 with corresponding back rests 31 are provided. Further, in such a use case, all passengers may have the same requirements and desires for accessibility of functions and connections. Therefore, as compared to the embodiment of Fig. 2B, the centre portion 21 of the interior side of the roof, is indicated to be larger such that it is reachable and accessible to each seat 30. However, in an embodiment, the centre portion 21 may be smaller. For example, using gesture control functionality, it may suffice to provide a suitable gesture sensor, like a camera and a processing unit with suitable software control, enabling user interaction from each seat 30 without each passenger being enabled to physically touching the control unit 40.

The indicated centre portions 21 in the embodiments of Fig. 2B and 2C are merely exemplary for explaining the concept of the centre portion and its function in the present invention. A housing of the control unit 40 may be arranged within the indicated centre portion 21. However, a visible cover arranged on the interior side of the vehicle roof may be larger and may cover a larger area.

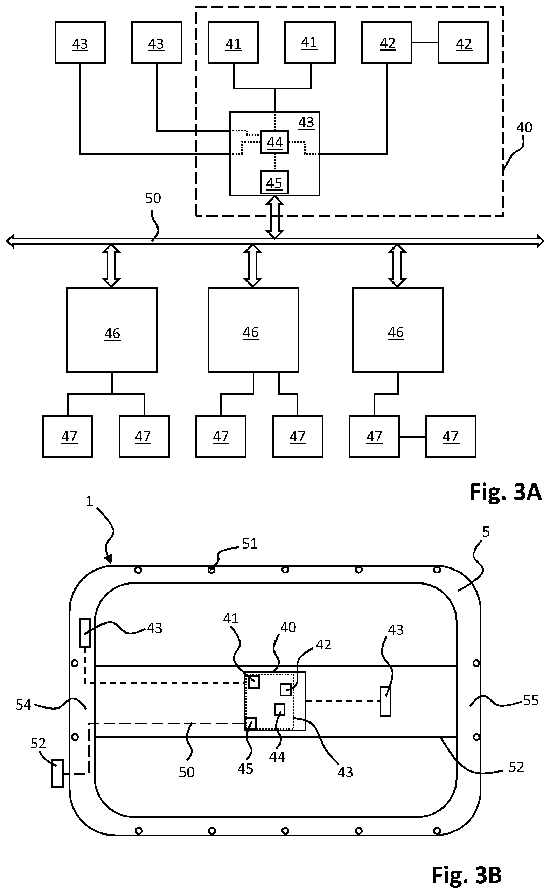

Fig. 3A shows a functional diagram of an embodiment of the control unit 40 and its integration in a vehicle network. In the illustrated embodiment, the control unit 40 comprises four sensors 41, 42 and two further sensors 43 are connected, but are not comprised in the control unit 40 itself. The control unit 40 is further connected to a vehicle network 50. The vehicle network 50 may any kind of network and may, for example, be a common LIN- or CAN-bus based network.

The control unit 40 further comprises a base unit 43 comprising a processor unit 44 and a network communication module 45. The network communication module 45 is configured to perform all operations for communicating through the vehicle network 50, receiving the input from the processing unit 44. The processing unit 44 is configured, **e.g. by** suitable executable instructions embedded in software stored in a storage medium accessible by the processing unit, to control the sensors 41, 42, 43, receive sensor output signals, determine conditions from the sensor output signals, detect user interaction signals, and the like, as apparent to those skilled in the art.

As shown in Fig. 3A, the sensors 41, 42 and 43 may be electrically connected to the processing unit 44 through any suitable connection, including but not limited to a direct link (cf. the two sensors 43), a bus communication link (cf. the two sensors 41) or a daisy-chained topology (cf. the two sensors 42).

The sensors 41, 42 and 43 may be used for sensing the at least one interior condition, but may as well be used for detecting a user interaction. For example, one of the sensors 41, 42 and 43 may be a camera for detecting a gesture of a passenger. Other kind of sensors provided and comprised or connected to the control unit 40 may be a temperature sensor, a radar sensor, a lidar sensor, an air quality sensor, a light sensor, an infrared sensor, a microphone, an oxygen sensor, a carbon-dioxide sensor, a dust-particles sensor, or any other sensor.

Further control units 46 are connected to the vehicle network 50 as well. The further control units 46 may be operatively connected to further sensors 47 through any suitable electrical coupling as described for the sensors 41, 42, and 43. Through communication between the control unit 40 and the further control units 46, sensor output signals of the different sensors 41, 42, 43 and 47 may be exchanged. In embodiment, each control unit 40, 46 may first perform an operation on such sensor output signal and may combine, analyse or adapt the sensor output signals. Moreover, the control units 40 and the further control units 46 may determine a condition based on available sensor output signals and provide the determined condition to one or more of the control unit 40 and the further control units 46.

In a particular embodiment, the sensors 41, 42, 43 and 47 may be a simple sensor like a temperature sensor or may be a more complex sensor comprising an own processing unit. For example, a radar sensor may include a dedicated processing unit for processing the received radar signals and supplying as a sensor output signal merely a position of a passenger in the passenger compartment.

Fig. 3B illustrates a practical embodiment, wherein a vehicle roof 1 comprises a frame 5 with mounting elements 51 for mounting the vehicle roof 1 on a vehicle body. The vehicle roof 1 as illustrated is an assembly that may be manufactured separately and be mounted as a complete unit on the vehicle body. To ease such mounting, it is preferred to have a simple wiring that may be easily connected to the wiring of the remainder of the vehicle.

The vehicle roof 1 comprises the control unit 40, multiple sensors 41, 42, 43, wherein the sensors 41, 42 may be provided on the base unit 43 together with the processing unit 44 and the network communication module 45. The network communication module 45 is coupled to a wiring connector 52 for operative connection to the vehicle network 50. The wiring connector 52 may also be used for supplying a supply voltage to the control unit 40 and the connected sensors, where appropriate. Further connections and functional couplings may also be provided through the wiring connector 52. For ease of mounting of the vehicle roof 1, it may be preferred to put as many required connections through the one wiring connector 52.

In the illustrated embodiment, the control unit 40 is covered by an interior cover 53 extending from a front beam 54 of the frame 5 to a rear beam 55 of the frame 5. Still, the control unit 40 and in particular its functions are in the centre portion of the vehicle roof 1.

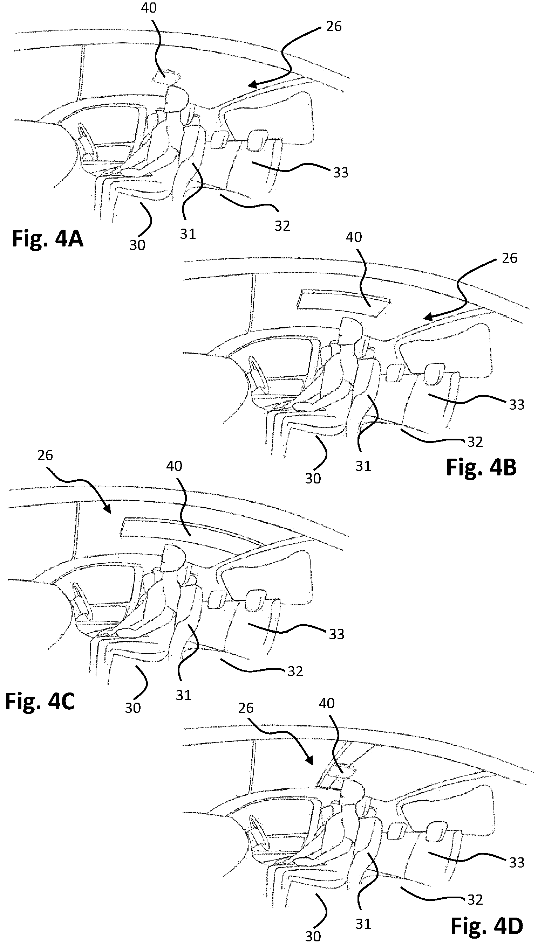

Figs. 4A - 4D each illustrate an exemplary embodiment of a control unit 40 arranged in a passenger compartment 26. In Fig. 4A, a small central unit is arranged in the centre portion of the roof.

In Fig. 4B, the control unit 40 extends over a larger length as compared to the embodiment of Fig. 4A. Thereby, the control unit 40 be more easily accessible to a back seat passenger and even a front seat passenger, if the front seat 30 is moved to a most forward position. Accessibility for a back seat passenger may be further improved by the embodiment as illustrated in Fig. 4C.

Fig. 4D illustrates an embodiment, wherein the vehicle roof is provided with a transparent, moveable panel 2a and a fixed transparent panel 2b, corresponding to the vehicle roof 1 illustrated in Fig. 1A. The control unit 40 is arranged on a middle beam 56 arranged between the two transparent panels 2a, 2b in the centre portion of the vehicle roof.

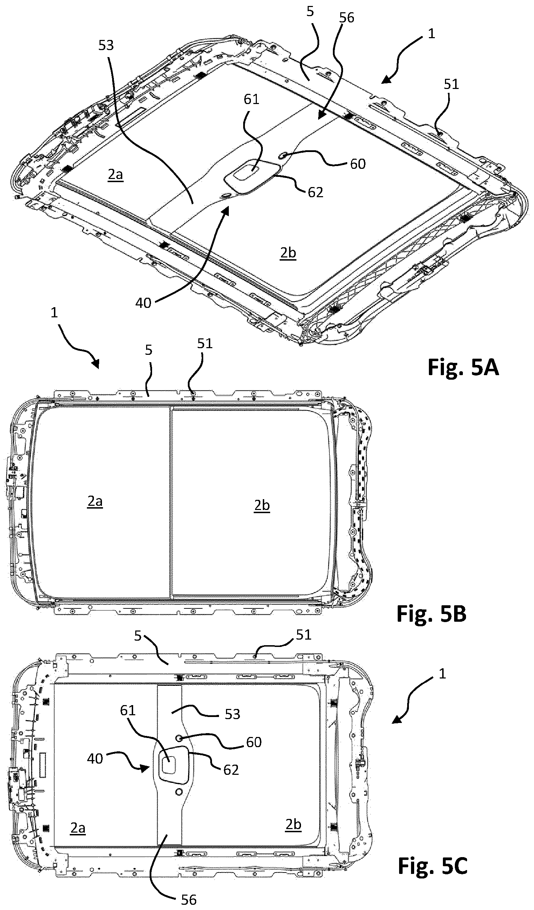

Fig. 5A - 5C illustrates a first particular embodiment of a vehicle roof 1, comprising a frame 5 with mounting elements 51, a moveable transparent closure member 2a and a fixed transparent panel 2b. At a centre position of the middle beam 56, the control unit 40 is provided. An interior cover 53 extends over the full width in the transverse direction TD.

The control unit 40 is provided with a reading light 60, an infrared sensor 61 and an indicator light 62. The reading light 60, in this embodiment actually two reading lights 60, are provided and arranged for providing light to a rear passenger sitting on the rear back seat. The reading light 60 may be switched on or off by any suitable means such as by use of a switch, gesture control or voice control.

The infrared sensor 61 has a relatively large opening angle of its field of view such that a large part of the passenger compartment is covered in the field of view. The infrared sensor 61 itself may be covered by a shielding element, wherein the shielding element is transparent to infrared radiation or at least to a relevant part of the infrared radiation spectrum, while providing an aesthetically pleasing surface to the passengers in the passenger compartment. Moreover, such element may be shaped to improve the detection of infrared radiation, **e.g.** by functioning as a lens increasing a field of view.

The indicator light 62 is embodied as a ring-shaped light element, wherein the indicator light 62 may provide different colours of light for indicating any kind of information to a passenger in the passenger compartment. For example, the indicator light 62 may indicate the detection of the presence of a person in the vehicle or may indicate a temperature difference between the exterior temperature and the interior temperature such that a passenger may decide to open or close the moveable closure member 2a or any other kind of air treatment device, like an air conditioner or the like. Of course, the indicator light 62 may as well be used as general interior lighting, **e.g.** when a passenger door is opened.

Moreover, the indicator light 62 may be segmented such that a running light effect may be generated or the indicator light 62 may indicate which passenger doors are open and which are closed. When applying gesture control or voice control, the indicator light 62 may be configured to provide feedback to a user that a certain control instruction is received and recognized.

Further functions and sensors may be provided in the control unit 40 as well, of course. However, such features may not be readily visible from the outside of the control unit 40 or its housing or cover.

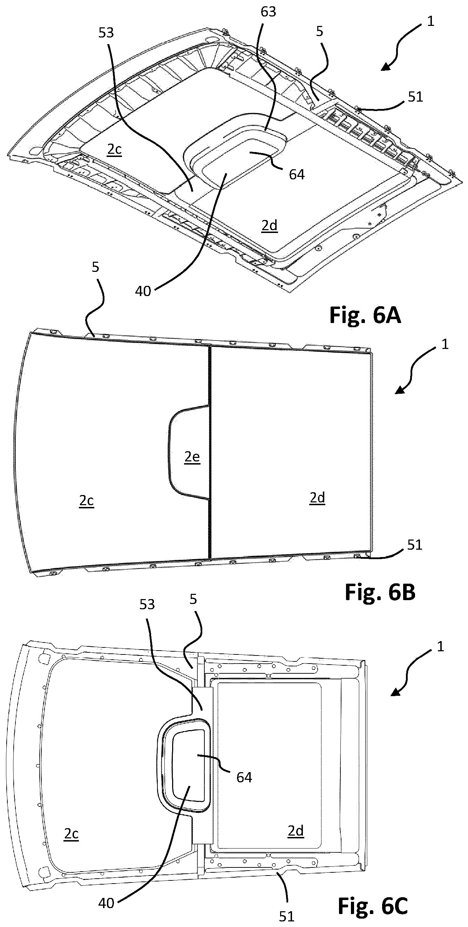

Figs. 6A - 6C illustrate a second practical embodiment of a vehicle roof 1 comprising the frame 5 with mounting elements 51. This second practical embodiment is provided with a first fixed panel 2c and a second fixed panel 2d. Both panels 2c, 2d may be transparent, e.g. from glass, but they may as well be opaque and possibly provided with solar cells, for example.

A moveable closure member 2e is provided at the exterior side of the centre portion of the roof where the control unit 40 is provided. The moveable closure member 2e is hingeably arranged such that the moveably arranged closure member 2e may be positioned upwards in the main driving direction for providing an opening to the exterior.

In this embodiment, a ventilating channel is provided, possibly provided with forced ventilation means like a fan. The housing of the control unit 40 thereto provides an opening, in this embodiment a slit 63, through which an air flow may be generated between the exterior and the passenger compartment. Opening the moveable closure member 2e opens the ventilating channel and the optional forced ventilation means may generate the air flow or a reduced air pressure at the exterior during driving may generate the air flow.

In this embodiment, the slit 63 is provided as an opening between the interior cover 53 and a control unit cover 64. The control unit cover 64 may be provided with additional functionality. For example, a sensor, a switch, a display, or any other element may be arranged at the surface of the control unit cover 64.

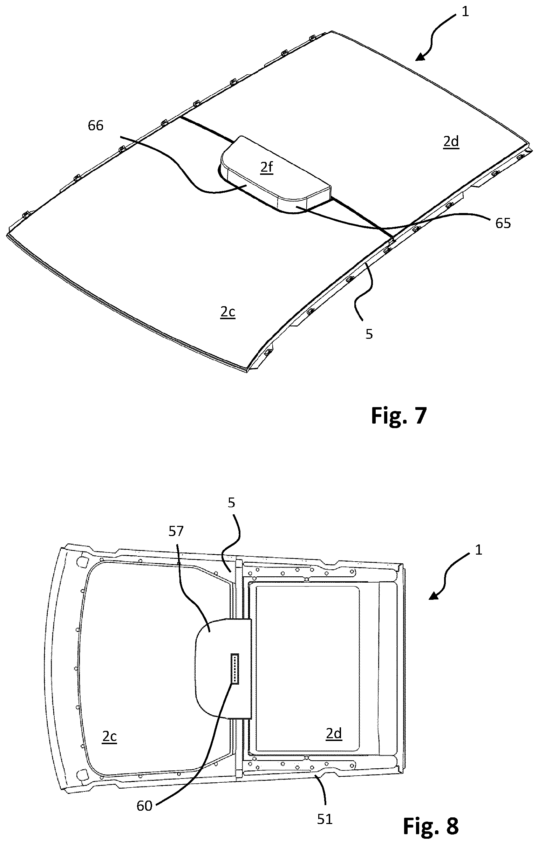

A third practical embodiment is shown in Fig. 7. Similar to the embodiment of Figs. 6A - 6C, two fixed panels 2c and 2d are provided. A moveably arranged member 2f is provided. The moveably arranged member 2f as shown is moveably upward to expose a sensor unit comprising sensors for autonomous driving, for example. In the illustrated embodiment, a first sensor 65 and a second sensor 66 are provided. These sensors may thus be exposed, when the vehicle is in an autonomous driving mode, while the sensor unit may be lowered when the vehicle is in a manual driving mode. In the lowered position, the aerodynamics of the vehicle is improved, reducing fuel consumption.

The control unit according to the present invention may be coupled to the first and second sensor 65, 66. The control unit may then assess the sensor outputs or may send the sensor outputs to a further control unit dedicated to autonomous driving control, for example.

In Fig. 8 a further embodiment of a roof assembly for use with the present invention is illustrated. The roof assembly 1 as illustrated corresponds to the roof assembly 1 of Figs. 6A - 6C. As compared to the embodiment of Figs. 6A - 6C, the control unit 40 is not fixedly mounted on the roof assembly **1.** Instead, the roof assembly 1 is provided with a base surface 57 and a connector device 60. A corresponding control unit is provided with a mating connector device. The mating connector device is configured to mate with the connector device 60 such that all relevant electrical connections are made through the connector device 60 and the mating connector device. Thus, the roof assembly 1 is configured and arranged to receive and hold a control unit that may be selected from a range of control units. For example, a control unit with basic functionality may be replaced with a control unit provided with an entertainment functionality, like a sound system or a video display.

As described herein, the control unit in the centre portion of the roof provides a hub function for interior control, including interior condition sensing and a user interaction function, while keeping an amount of wiring and cabling to a minimum, thereby easing manufacturing of the vehicle and reducing weight of the vehicle.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. A control unit (40) configured to be mounted in a vehicle roof (1) in a passenger compartment (26) of a vehicle (20),
wherein the control unit is configured to
a) sense at least one condition in the passenger compartment;
b) provide at least one user interaction function; and
c) communicate with a further control unit (46) in the vehicle;
wherein the at least one user interaction function comprises at least one function of a group of functions comprising switching, gesture detection and displaying,
**characterized in that**
the control unit (40) is configured to be mounted in a centre portion (21) of the vehicle roof (1) and wherein the centre portion of the vehicle roof is defined as a surface area of the vehicle roof that
• extends in a main driving direction (MD) from a backrest (31) of a front seat (30) in the passenger compartment (26) to a backrest (33) of a back seat (32); and
• is arranged in a transverse direction (TD) centred between a first lateral edge of the vehicle roof and an opposite second lateral edge of the vehicle roof, the transverse direction being perpendicular to the main driving direction.

2. The control unit (40) according to claim **1,** wherein the control unit comprises a housing, wherein the housing is configured to be arranged in the centre portion (21) of the vehicle roof (1).

3. The control unit (40) according to claim 2, wherein the housing further comprises a ventilation function, the ventilation function being configured to provide an air flow path between the passenger compartment (26) and an exterior of the vehicle (20).

4. The control unit (40) according to claim 1, wherein the control unit comprises a sensor (41-43;47) to sense the at least one condition in the passenger compartment (26).

5. The control unit (40) according to claim 1, wherein the at least one condition in the passenger compartment (26) is at least one of a group of conditions, the group comprising temperature, air quality and passenger presence.

6. The control unit (40) according to claim 1, wherein the control unit is provided with a network communication module (45) to communicate with the further control unit (46) in the vehicle (20).

7. The control unit (40) according to claim 1, wherein the control unit is configured to communicate the sensed condition in the passenger compartment (26) to the further control unit (46) in the vehicle (20).

8. The control unit (40) according to claim 1, wherein the control unit is configured to communicate a user interaction signal of the user interaction function between the control unit and the further control unit (46) in the vehicle (20).

9. The control unit (40) according to claim 1, wherein a further sensor is arranged outside the centre portion (21) of the vehicle roof (1), the further sensor being configured to be operatively coupled to the control unit for communicating with the further control unit (46).

10. The control unit (40) according to claim 1, wherein the control unit is provided with a processing unit (44), wherein the processing unit is configured to interpret at least one of a sensing signal and a user interfacing signal.

11. Vehicle (20) provided with the control unit (40) according to claim 1.

12. Vehicle (20) provided with a connector device in a centre portion (21) of a vehicle roof (1), wherein the connector device is coupled to a further control unit (46) of the vehicle, and a control unit (40) according to claim 1 mountable in the centre portion (21) of the vehicle roof, wherein the control unit is provided with a mating connector device configured to mate with the connector device of the vehicle and for operatively coupling the control unit to the further control unit.

13. Vehicle (20) and control unit (40) according to claim 12, wherein the connector device is coupled to a power source of the vehicle for supplying a supply voltage and wherein the control unit is configured to receive a supply voltage through the mating connector device.

## Patentansprüche

1. Eine Steuereinheit, welche dazu eingerichtet, in einem Fahrzeugdach (1) in einem Fahrgastraum (26) eines Fahrzeugs (20) angebracht zu werden,
wobei die Steuereinheit dazu eingerichtet ist, um
a) mindestens einen Zustand im Fahrgastraum zu erfassen,
b) mindestens eine Benutzerinteraktionsfunktion bereitzustellen, und
c) mit einer weiteren Steuereinheit (46) in dem Fahrzeug zu kommunizieren, und
wobei die mindestens eine Benutzerinteraktionsfunktion mindestens eine Funktion aus einer Gruppe von Funktionen, welche Schalten, Gestenerkennung und Anzeigen aufweist, aufweist
**gekennzeichnet dadurch, dass**
die Steuereinheit (40) dazu eingerichtet ist in einem Mittelabschnitt (21) des Fahrzeugdachs (1) angebracht zu sein, und wobei der Mittelabschnitt des Fahrzeugdachs als ein Flächenbereich des Fahrzeugdachs definiert ist, welcher
• sich in einer Hauptfahrtrichtung (MD) von einer Rückenlehne (31) eines Vordersitzes (30) im Fahrgastraum (26) aus zu einer Rückenlehne (33) eines Rücksitzes (32) zu erstrecken, und
• in einer Querrichtung (TD) zentriert zwischen einem ersten Seitenrand des Fahrzeugdachs und einem gegenüberliegenden zweiten Seitenrand des Fahrzeugdachs angeordnet ist, wobei die Querrichtung senkrecht zu der Hauptfahrtrichtung ist.

2. Steuereinheit (40) nach Anspruch 1, wobei die Steuereinheit ein Gehäuse aufweist, wobei das Gehäuse dazu eingerichtet ist, im Mittelabschnitt (21) des Fahrzeugdachs (1) angeordnet zu sein.

3. Steuereinheit (40) nach Anspruch 2, wobei das Gehäuse ferner eine Belüftungsfunktion aufweist, wobei die Belüftungsfunktion dazu eingerichtet ist, einen Luftströmungsweg zwischen dem Fahrgastraum (26) und einem Außenbereich des Fahrzeugs (20) bereitzustellen.

4. Steuereinheit (40) nach Anspruch 1, wobei die Steuereinheit einen Sensor (41-43; 47) aufweist, um den mindestens einen Zustand im Fahrgastraum (26) zu erfassen.

5. Steuereinheit (40) nach Anspruch 1, wobei der mindestens eine Zustand im Fahrgastraum (26) mindestens einer aus einer Gruppe von Zuständen ist, wobei die Gruppe Temperatur, Luftqualität und Fahrgastanwesenheit umfasst.

6. Steuereinheit (40) nach Anspruch 1, wobei die Steuereinheit mit einem Netzwerkkommunikationsmodul (45) versehen ist, um mit der weiteren Steuereinheit (46) im Fahrzeug (20) zu kommunizieren.

7. Steuereinheit (40) nach Anspruch 1, wobei das Steuergerät dazu eingerichtet ist, den erfassten Zustand im Fahrgastraum (26) an die weitere Steuereinheit (46) im Fahrzeug (20) zu kommunizieren.

8. Steuereinheit (40) nach Anspruch 1, wobei die Steuereinheit dazu eingerichtet ist, ein Benutzerinteraktionssignal der Benutzerinteraktionsfunktion zwischen der Steuereinheit und der weiteren Steuereinheit (46) im Fahrzeug (20) zu kommunizieren.

9. Steuereinheit (40) nach Anspruch 1, wobei ein weiterer Sensor außerhalb des Mittelabschnitts (21) des Fahrzeugdachs (1) angeordnet ist, wobei der weitere Sensor dazu eingerichtet ist, mit der Steuereinheit zur Kommunikation mit der weiteren Steuereinheit (46) operativ verbunden zu sein.

10. Steuereinheit (40) nach Anspruch 1, wobei die Steuereinheit mit einer Verarbeitungseinheit (44) versehen ist, wobei die Verarbeitungseinheit dazu eingerichtet ist, mindestens eines von einem Erfassungssignal und einem Benutzerschnittstellensignal zu interpretieren.

11. Fahrzeug (20), welches mit der Steuereinheit (40) nach Anspruch 1 versehen ist.

12. Fahrzeug (20), welches mit einer Verbindungsvorrichtung in einem Mittelabschnitt (21) eines Fahrzeugdachs (1) versehen ist, wobei die Verbindungsvorrichtung mit einer weiteren Steuereinheit (40) des Fahrzeugs (20) verbunden ist, und eine Steuereinheit (40) nach Anspruch 1, welche in dem Mittelabschnitt (21) des Fahrzeugdachs (1) montierbar ist, wobei die Steuereinheit mit einer Gegenverbindungsvorrichtung versehen ist, welche so eingerichtet ist, dass sie mit der Verbindungsvorrichtung des Fahrzeugs zusammenpasst und die Steuereinheit operativ mit der weiteren Steuereinheit verbindet.

13. Fahrzeug (20) und Steuereinheit (40) nach Anspruch 12, wobei die Verbindungsvorrichtung mit einer Stromquelle des Fahrzeugs zur Zufuhr einer Versorgungsspannung verbunden ist und wobei die Steuereinheit dazu eingerichtet ist, eine Versorgungsspannung über die Gegenverbindungsvorrichtung zu erhalten.

## Revendications

1. Unité de commande (40) configurée pour être montée dans un toit de véhicule (1) dans un habitacle (26) d'un véhicule (20),
dans laquelle l'unité de commande est configurée pour
a) détecter au moins une condition dans l'habitacle ;
b) fournir au moins une fonction d'interaction d'utilisateur ; et
c) communiquer avec une autre unité de commande (46) dans le véhicule ;
dans laquelle l'au moins une fonction d'interaction d'utilisateur comprend au moins une fonction d'un groupe de fonctions comprenant une commutation, une détection de gestes et un affichage,
**caractérisée en ce que**
l'unité de commande (40) est configurée pour être montée dans une partie centrale (21) du toit de véhicule (1) et dans laquelle la partie centrale du toit de véhicule est définie comme une surface du toit de véhicule qui
• s'étend dans une direction de conduite principale (MD) d'un dossier (31) d'un siège avant (30) dans l'habitacle (26) à un dossier (33) d'un siège arrière (32) ; et
• est agencée dans une direction transversale (TD) centrée entre un premier bord latéral du toit de véhicule et un second bord latéral opposé du toit de véhicule, la direction transversale étant perpendiculaire à la direction de conduite principale.

2. Unité de commande (40) selon la revendication 1, dans laquelle l'unité de commande comprend un boîtier, dans laquelle le boîtier est configuré pour être agencé dans la partie centrale (21) du toit de véhicule (1).

3. Unité de commande (40) selon la revendication 2, dans laquelle le boîtier comprend en outre une fonction de ventilation, la fonction de ventilation étant configurée pour fournir un trajet de flux d'air entre l'habitacle (26) et un extérieur du véhicule (20).

4. Unité de commande (40) selon la revendication 1, dans laquelle l'unité de commande comprend un capteur (41-43 ; 47) pour détecter l'au moins une condition dans l'habitacle (26).

5. Unité de commande (40) selon la revendication 1, dans laquelle l'au moins une condition dans l'habitacle (26) est au moins l'une d'un groupe de conditions, le groupe comprenant la température, la qualité de l'air et la présence de passagers.

6. Unité de commande (40) selon la revendication 1, dans laquelle l'unité de commande est dotée d'un module de communication réseau (45) pour communiquer avec l'autre unité de commande (46) dans le véhicule (20).

7. Unité de commande (40) selon la revendication 1, dans laquelle l'unité de commande est configurée pour communiquer la condition détectée dans l'habitacle (26) à l'autre unité de commande (46) dans le véhicule (20).

8. Unité de commande (40) selon la revendication 1, dans laquelle l'unité de commande est configurée pour communiquer un signal d'interaction d'utilisateur de la fonction d'interaction d'utilisateur entre l'unité de commande et l'autre unité de commande (46) dans le véhicule (20) .

9. Unité de commande (40) selon la revendication 1, dans laquelle un autre capteur est agencé à l'extérieur de la partie centrale (21) du toit de véhicule (1), l'autre capteur étant configuré pour être couplé de manière opérationnelle à l'unité de commande pour communiquer avec l'autre unité de commande (46).

10. Unité de commande (40) selon la revendication 1, dans laquelle l'unité de commande est dotée d'une unité de traitement (44), dans laquelle l'unité de traitement est configurée pour interpréter au moins l'un d'un signal de détection et d'un signal d'interface d'utilisateur.

11. Véhicule (20) doté de l'unité de commande (40) selon la revendication 1.

12. Véhicule (20) comprenant un dispositif de connexion dans une partie centrale (21) d'un toit de véhicule (1), dans lequel le dispositif de connexion est couplé à une autre unité de commande (46) du véhicule, et une unité de commande (40) selon la revendication 1 pouvant être montée dans la partie centrale (21) du toit de véhicule, dans lequel l'unité de commande est dotée d'un dispositif de connexion apparié configuré pour s'apparier au dispositif de connexion du véhicule et pour coupler de manière opérationnelle l'unité de commande à l'autre unité de commande.

13. Véhicule (20) et unité de commande (40) selon la revendication 12, dans lesquels le dispositif de connexion est couplé à une source d'alimentation du véhicule pour fournir une tension d'alimentation et dans lesquels l'unité de commande est configurée pour recevoir une tension d'alimentation par l'intermédiaire du dispositif de connexion apparié.
